Europäisches Patentamt

(19) European Patent Office

Office européen des brevets

(11) Publication number: **0 311 573 B1**

## (12) EUROPEAN PATENT SPECIFICATION

(45) Date of publication of patent specification:
02.10.91 Bulletin 91/40

(51) Int. Cl.⁵: **F16K 47/02, F16K 11/00**

(21) Application number: **88830346.8**

(22) Date of filing: **23.08.88**

(54) Cartridge for mixing faucets with ceramics plate shutter.

(30) Priority: **18.09.87 IT 2196887**

(43) Date of publication of application:
**12.04.89 Bulletin 89/15**

(45) Publication of the grant of the patent:
**02.10.91 Bulletin 91/40**

(84) Designated Contracting States:
**AT BE CH DE ES FR GB GR LI LU NL SE**

(56) References cited:
**AU-B- 41 270**
**DE-A- 3 127 737**
**DE-A- 3 202 113**
**GB-A- 2 013 308**

(73) Proprietor: **MAMOLI ROBINETTERIA S.p.A.**
**Piazza S. Mamoli, 1**
**I-20084 LACCHIARELLA (Milano) (IT)**

(72) Inventor: **Pesenti, Alessandro**
**Piazza S. Mamoli, 1**
**I-20084 Lacchiarella Milano (IT)**

(74) Representative: **Cicogna, Franco**
**Ufficio Internazionale Brevetti Dott.Prof.**
**Franco Cicogna Via Visconti di Modrone, 14/A**
**I-20122 Milano (IT)**

## Description

### BACKGROUND OF THE INVENTION

The presente invention relates to a cartridge for a mixing faucet, having a ceramics plate shutter.

As is known, a problem frequently encountered in making cartridges for mixing faucets provided with ceramics plate shutters consists of the noise due to the water flow inside the ports formed through the ceramics plates.

In order to overcome this problem, cartridges have already been provided, which include net arrangements which are located in the water path so as to break the flow and accordingly reduce the noise.

This solution, however, generates other drawbacks, the first of which is that the mentioned net arrangements remarkably reduce the useful passage port, thereby causing the water pressure to remarkably drop.

Moreover, deposits and scale are frequently formed which tend to further reduce the port opening and, sometimes, completely block it.

Other solutions provide for the use of projecting elements which, even if they are advantageous with respect to the use of net arrangements, are also affected by problems since scale particles tend to built in between the projecting elements so as to remarkably reduce their anti-noise function.

From the documents DE-A-3127737 and AU-B-41270/85 there is known a cartridge for faucets according to the preamble of claim 1.

### SUMMARY OF THE INVENTION

Accordingly, the aim of the present invention is to overcome the above mentioned drawbacks, by providing a cartridge for mixing faucets, having ceramics plate shutters, which affords the possibility of completely eliminating the faucet noise without blocking the water passage ports caused by the deposition of limestone and the like.

Within the scope of the above mentioned aim, a main object of the present invention is to provide such a cartridge for mixing faucets which affords the possibility of remarkably reducing the noise level, owing to a suitable distribution of anti-noise elements so arranged as to exert a progressive anti-noise function on the water flow.

Another object of the present invention is to provide such a cartridge for mixing faucets which is very reliable and safe in operation.

Yet another object of the present invention is to provide such a cartridge for mixing faucets which can be easily made starting from easily available components and materials and which, moreover, is very advantageous from a mere economic stand-point.

According to one aspect of the present invention, the above mentioned aim and objects, as well as yet other objects, which will become more apparent hereinafter, are achieved by a cartridge for mixing faucets having the features of the characterizing part of claim 1.

### BRIEF DESCRIPTION OF THE DRAWINGS

Further characteristics and advantages of the present invention will become more apparent from the following detailed description of a preferred, though not exclusive embodiment thereof, which is illustrated, by way of an indicative but not limitative example, in the accompanying drawings in which :

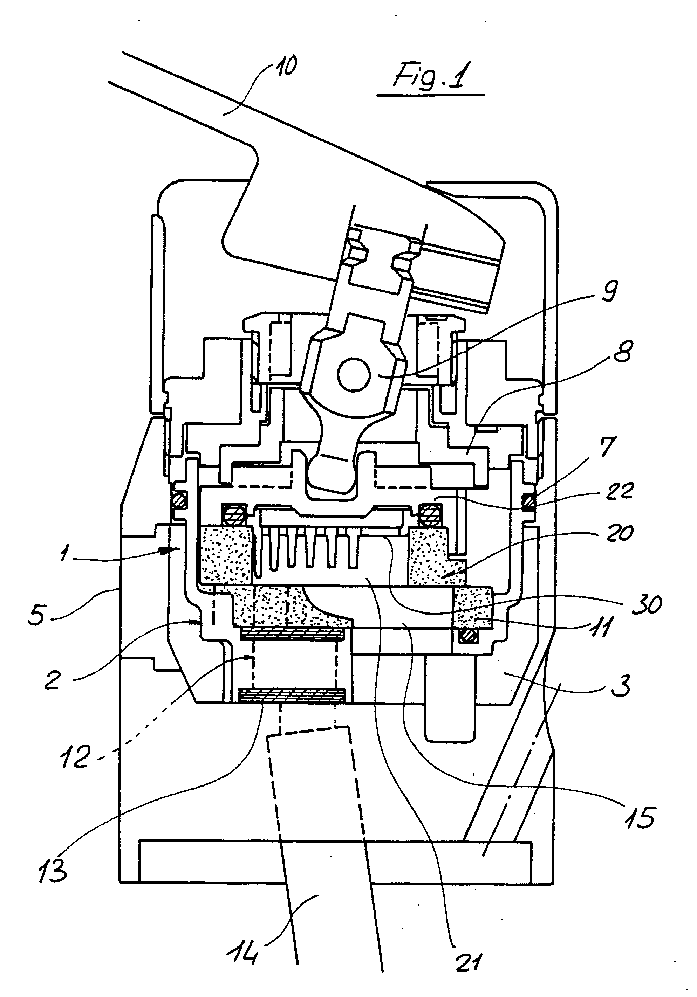

figure 1 is a schematic cross-sectional view of the cartridge according to the present invention, applied inside a faucet ;

figure 2 shows a top plan view of the anti-noise plate cross-sectioned along a plane parallel to its bottom surface ;

figure 3 shows a cross-sectional view of the anti-noise plate taken along the line III-III of figure 2 ;

figure 4 shows a cross'sectional view of the anti-noise plate take along the line IV-IV of figure 2 ;

figure 5 shows the anti-noise plate seen from its top surface or face ;

figure 6 is a schematic top plan view illustrating the anti-noise plate according to the invention and clearly shows the arrangement of the lugs having different height or length ; and

figure 7 is a schematic top plan view illustrating the anti-noise plate and showing in detail its throughgoing holes.

### DESCRIPTION OF THE PREFERRED EMBODIMENT

With reference to the figures of the accompanying drawings, the cartridge for mixing faucets, of the ceramics plate shutter type, according to the present invention, which is overally indicated at the reference number 1, comprises a body 2, which is housed in a recess 3 defined by the faucet and communicating with the outlet 5.

The body 2, at its top edge, is tightly coupled through an O-ring 7 to the side wall of the recess 3 and is closed at the top by a cap 8 therein is engaged, in a manner known per se, the articulated joint 9 of a control lever 10, for driving the operating mechanism of the cartridge, as it will be disclosed in a more detailed way hereinafter.

The cartridge 1 is provided, at its bottom, with a fixed plate, generally made of a ceramics material and indicated at the reference number 11, which is provided with a plurality of inlet holes, indicated at 12, which are coupled, through tightness gaskets 13, with the water delivery ducts 14 as well as an output or outlet port 15 which leads to the mentioned recess 3.

Above the fixed plate 11 there is slidingly engaged a movable plate 20, also made of a ceramics material, which defines a control port 21 which, depending on the position of the movable plate with respect to the fixed plate, communicates the inlet ducts 12 with the outlet port 15.

In particular, the movable plate is displaced by operating the control lever 10 which engages with the guiding plate 22, tightly coupled to the plate 20 and associated with the articulated joint 9.

A main feature of the present invention is that in the control port 21 an anti-noise small plate indicated generally with reference number 30 is housed.

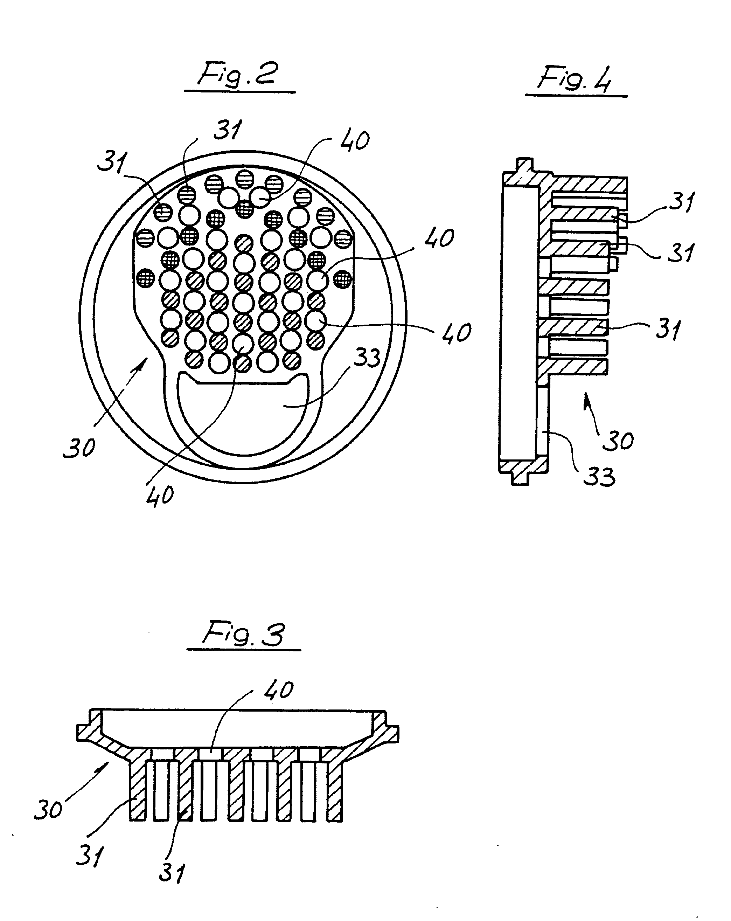

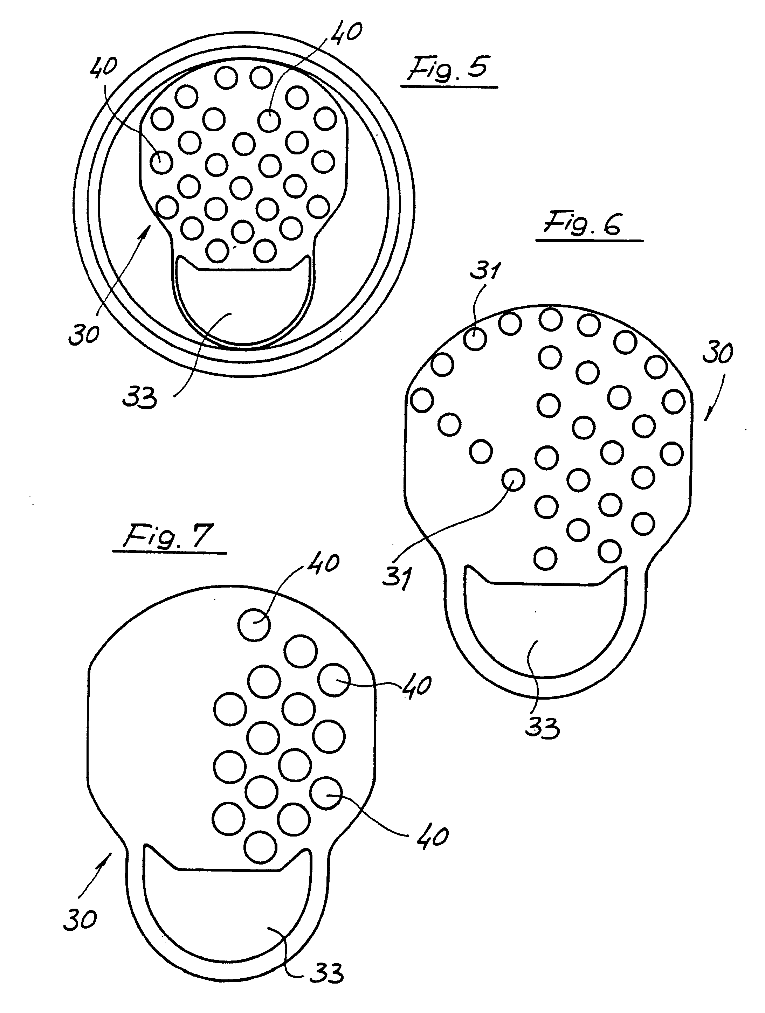

The anti-noise plate 30, which is better shown in figures 2 to 7, is essentially provided with a plurality of lugs 31, which extend substantially perpendicular to the plane of the plate 30, from the face thereof facing the fixed plate 11, in a substantially perpendicular direction to the plane of said plates.

Another important feature of the present invention is that the lugs 31 have a different height and, more specifically, the lugs 31 arranged at a greater distance from the outlet port 15 have a greater length or height.

Moreover, the mentioned anti-noise plate 30 is provided at one end, at the side facing said outlet port 15, a passage opening, indicated at 33.

Another main feature of the present invention is that the lugs are preferably distributed according to circumferential portions, having a theoretic center at the opening 33.

The greater length lugs are those provided at the outermost circumferential portions, whereas the lugs provided on the circumferential portions facing said opening have an even length.

Yet another important feature of the present invention is that between the lugs there are provided throughgoing holes 40, also distributed on circumferential portions, adapted to allow for water to also pass through the anti-noise plate, thereby preventing deposit of limestone or other impurities.

Thus, with the disclosed arrangement, the water flow will impinge against the lugs and in this manner the flow water noise will be greatly reduced.

Moreover, at least a portion of the water flow will pass through the anti-noise plate and will be reintroduced toward the inlet port, by passing through the opening 33.

From carried out tests it has been found that, even after a very long period of use, none limestone or impurity deposits in the cartridge.

Moreover, the flow noise is greatly reduced, since the water flow is suitably interrupted and offset, thereby preventing swirling and noisy flow threads from being generated.

From the above disclosure it should be apparent that the invention fully achieves the intended task and objects.

## Claims

1. A cartridge for mixing faucets, of the type including ceramics plate shutters, comprising a body adapted to be housed inside a faucet and including a fixed plate (11) communicating with the water delivery ducts (14) and having inlet and outlet ports, on said fixed plate there being slidingly arranged a movable plate (20) having a control port (21), in said control port (21) there being arranged an anti-noise plate (30) provided with a plurality of different length lugs (31) affecting the water flow through said control port (21), characterized in that said anti-noise plate (30) comprises throughgoing holes provided between said lugs, and in that said anti-noise plate (30) is provided with an opening (33) at the side thereof facing said outlet port (15).

2. A cartridge for mixing faucets, according to claim 1, characterized in that said lugs (31) are distributed according to circumferential portions, having a theoretic center at the side of said opening (33).

3. A cartridge for mixing faucets, according to claim 1, characterized in that the lugs provided on the outermost circumferential portions have a greater length.

4. A cartridge for mixing faucets, according to claim 1, characterized in that said throughgoing holes (40) are distributed between said lugs (31) on substantially circumferential portions.

## Patentansprüche

1. Kartusche für Mischhähne mit keramischer Verschlussplatte, einschliessend einen innerhalb einem Hahn aufnehmbare Körper, der eine unbewegliche mit den Wasserzufuhrkanäle (14) kommunizierende und mit Eintritts- und Austrittspforten vorgesehene Platte (11) enthält, wobei auf die obige unbewegliche Platte eine bewegliche mit eine Kontrollpforte (21) vorgesehene Platte (20) verschiebbar angeordnet ist, wobei in dieser Kontrollpforte (21) eine mit mehreren Vorsprünge (31) verschiedener Länge vorgesehene schalldichte Platte (30) angeordnet ist und die Vorsprünge das Wasserstrom durch die Kontrollpforte (21) einflüssen, dadurch gekennzeichnet, dass die obige schalldichte Platte (30) zwischen den obengenannten Vorspünge vorgesehenen Durchgangslöcher aufweist, und dass die obengenannte schalldichte Platte (30) mit einer Öffnung (33) auf ihre Seite der Austrittspforte (15) gegenüber vorgesehen ist.

2. Kartusche für Mischhähne nach Anspruch 1, dadurch gekennzeichnet, dass die obengenannten Vorsprünge (31) gemäss Umfangsportionen verteilt sind, deren theoretischen Mittelpunkt der obengenannten Öffnung (33) seitlich liegt.

3. Kartusche für Mischhähne nach Anspruch 1, dadurch gekennzeichnet, dass die Vorsprünge, die auf den äussersten Umfangsportionen liegen, eine grössere Länge besitzen.

4. Kartusche für Mischhähne nach Anspruch 1, dadurch gekennzeichnet, dass die obengenannten Durchgangslöcher (40) zwischen den obengenannten Vorsprünge (31) auf wesentlichen Umfangsportionen verteilt sind.

## Revendications

1. Cartouche pour robinetterie mélangeuse du genre comprenant une plaque de fermeture céramique, présentant un corps apte à être logé à l'intérieur d'une robinetterie et comprenant une plaque fixe (11) communiquant avec les conduites (14) d'alimentation de l'eau et présentant portes d'entrée et de sortie, sur ladite plaque fixe y étant arrangé coulissant une plaque mouvable (20) présentant une porte de commande (21), dans ladite porte de commande (21) y étant arrangé une plaque insonore (30) munie de plusieurs saillies (31) ayant une longueur différente et influençant le courant d'eau à travers ladite porte de commande (21), caractérisée en ce que ladite plaque insonore (30) comprend de trous passants prévus entre lesdites saillies, et en ce que ladite plaque d'isolation sonore (30) est munie d'une ouverture (33) sur son côté en face de ladite porte de sortie (15).

2. Cartouche pour robinetterie mélangeuse selon la revendication 1, caractérisée en ce que lesdites saillies (31) sont distribuées selon de portions périmétrales dont le centre théorique se trouve sur le côté de ladite ouverture (33).

3. Cartouche pour robinetterie mélangeuse selon la revendication 1, caractérisée en ce que les saillies prévues sur les portions périmétrales les plus extérieures, présentent une longueur plus grande.

4. Cartouche pour robinetterie mélangeuse selon la revendication 1, caractérisé en ce que lesdits trous passants (40) sont distribués entre lesdites saillies (31) sur portions essentiellement périmetrales.

_Fig.1_

Fig.2

Fig.4

Fig.3

_Fig.5_

40

40

30

33

_Fig.6_

31

30

31

33

_Fig.7_

40

40

40

30

33